# EUROPÄISCHE PATENTSCHRIFT

(11) **EP 3 546 414 B1**
(45) Veröffentlichungstag und Bekanntmachung des Hinweises auf die Patenterteilung: **15.12.2021**
(21) Anmeldenummer: 19162321.4
(22) Anmeldetag: 12.03.2019
(51) Int. Cl.: B66C 23/90, B66C 23/80, B66C 23/00, G01L 1/02, B60S 9/12, E02F 9/08, G07C 3/00, G07C 5/00, G01G 19/10

(54) **VERFAHREN ZUR ERMITTLUNG DES GEWICHTS EINER VON EINER LADEMASCHINE AUFGENOMMENEN LAST UND LADEMASCHINE HIERFÜR**
METHOD FOR DETERMINING THE WEIGHT OF A LOAD HELD BY A LOADING MACHINE AND LOADING MACHINE FOR SAME
PROCÉDÉ DE DÉTERMINATION DU POIDS D'UNE CHARGE REÇUE PAR UNE MACHINE DE CHARGEMENT ET MACHINE DE CHARGEMENT ASSOCIÉE

(30) Priorität: 14.03.2018 DE 102018105907
(43) Veröffentlichungstag der Anmeldung: 02.10.2019
(73) Patentinhaber: Terex Deutschland GmbH, 76669 Bad Schönborn (DE)
(72) Erfinder: Dietze, Kai, 76669 Bad Schönborn (DE)
(74) Vertreter: Moser Götze & Partner Patentanwälte mbB

(56) Entgegenhaltungen:
- EP-A1- 1 150 019
- WO-A1-2013/120118
- DE-A1-102005 034 377
- JP-B2- 3 447 410
- US-A1- 2006 045 661

## Beschreibung

Die Erfindung betrifft ein Verfahren zur Ermittlung des Gewichts einer von einer Lademaschine aufgenommenen Last, in dem mittels Messelementen Betriebs-Fluiddrücke einzelner, die Lademaschine in einem Betriebszustand auf einem Untergrund hydraulisch abstützender Stützelemente ermittelt werden. Auch betrifft die Erfindung eine Lademaschine mit einem Unterwagen, einem drehbar hierauf gelagerten Oberwagen, an dem ein wippbarer Ausleger mit einem Ladestiel und einem Lastaufnahmemittel angeordnet ist und mit einer Steuereinheit zur Durchführung des Verfahrens zur Ermittlung des Gewichts einer von einer Lademaschine aufgenommenen Last.

Der Umschlag von Gütern erfordert Kenntnis über das jeweilige Gewicht einzeln aufgenommener sowie innerhalb eines Zeitraums insgesamt beförderter Lasten. Hieraus lassen sich Rückschlüsse auf die Umschlagleistung der jeweiligen Lademaschine ziehen und Abschätzungen bezüglich der Auslastung eines nachfolgenden Transportprozesses vornehmen. Das hierfür notwendige Wiegen und Zählen der Güter und der Nutzlast erfolgt über geeignete Messelemente, deren Anordnung beispielsweise die Kräfte zwischen einem Lastaufnahmemittel, wie beispielsweise einem Greifer und einem Ausleger der Lademaschine messen.

Hierzu offenbart die Offenlegungsschrift DE 1 531 166 A1 eine Einrichtung zur Überwachung der Kippsicherheit von Kranen, insbesondere von Mobilkranen, wobei ein Kippweg eines Unterwagens als Maß für die Kippkraft durch an geeigneter Stelle angebrachte Endschalter gemessen wird und zur Auswertung der Messwerte logische Schaltungen verwendet werden. Eine drohende Kippgefahr wird optisch oder akustisch signalisiert. Sollte der Kippgefahr nicht zeitnah abgeholfen werden, wird der das drohende Kippen bewirkende Hub durch selbsttätiges Eingreifen in die Steuerungsanlage des Krans gesperrt. Alternativ oder in Ergänzung zu den Endschaltern wird auch die Verwendung von Druckmessdosen aufgezeigt, deren Anordnung zwischen dem Unterwagen und den Radfedern oder den ausfahrbaren Stützbeinen des Krans vorgeschlagen wird. Neben der Überwachung der Kippsicherheit kann mit der Einrichtung jederzeit die Gesamtbelastung des Kranes ermittelt werden.

Aus der Offenlegungsschrift DE 10 2008 021 627 A1 ist eine Überlastsicherung für einen Mobilkran bekannt, die beliebige Abstützgeometrien für diesen berücksichtigt. Dazu weist der Kran mindestens eine Speichereinheit auf, in der für verschiedene Kranparameter Grenzkurven oder Grenzwerte gespeichert sind, die zur Gewährleistung der Kransicherheit nicht überschritten werden dürfen. Zur Überwachung der einzelnen Grenzwerte der verschiedenen Parameter auf Überschreitung umfasst der Kran Mittel zur Gewährleistung der Kransicherheit. Insbesondere sind Mittel enthalten, die die aktuelle Stellung der den Kran abstützenden, aus- sowie einfahrbaren Stützen und/oder deren Lastgrenze im ausgefahrenen Zustand überwachen. Ferner umfasst der Kran Mittel, die abhängig von der Ist-Position der Stützen die Kippkante des Krans als Grenzwert ermitteln sowie Mittel, die abhängig von einzelnen Parametern und der aufgenommenen Last ermitteln, ob der Betriebszustand des Krans innerhalb der Grenzwerte liegt. Die Lage eines Schwerpunktes des Krans kann dem Kranfahrer als zwei- oder dreidimensionale Abbildung zur Verfügung gestellt werden.

Die internationale Anmeldung WO 2013/013821 A1 zeigt eine Steuervorrichtung zur Verhinderung unzulässig hoher Kippmomente an einer mobilen Arbeitsmaschine mit bewegbarem Arbeitsarm, wie beispielsweise einem Radlader, einem Ladekran, einem Teleskoplader oder einer landwirtschaftlichen Zugmaschine mit Front-, Seiten- oder Hecklader. Hierzu weist die Steuervorrichtung mindestens einen an wenigstens einem der Fahrteile angeordneten Lastsensor sowie mindestens einen Winkelsensor für einen Wippwinkel des Arbeitsarms auf. Durch Heranziehen eines weiteren, eine weitere Auflagelast an einem weiteren Fahrteil ermittelnden Sensors ist ferner die Gesamtmasse der mobilen Arbeitsmaschine ermittelbar. Ein Auswerte- und Steuergerät verarbeitet die eingehenden Signale des Lastsensors und des Winkelsensors und ermittelt, bevorzugt über eine Recheneinheit, eine maximal mögliche, das jeweils unzulässige Kippmoment verhindernde Bewegungsgeschwindigkeit für den bewegbaren Arbeitsarm. Alternativ kann auch ein in der Recheneinheit abgelegtes Bewegungsgeschwindigkeitskennlinienfeld als Sollvorgabe für die zu berechnende maximale Bewegungsgeschwindigkeit dienen. Vorteilhaft kann ein Schätzen oder Ermitteln der zu bewegenden Lastmasse der Berechnung der Bewegungsgeschwindigkeit vorgeschaltet sein.

Aus der japanischen Patentschrift JP 3 447410 B2 ist ein Verfahren gemäß dem Oberbegriff des Anspruchs 1 bekannt. Diese Patentschrift offenbart ein System zur Vermeidung einer Überlastung, insbesondere eines Kippens, eines Lastwagens mit einem Kranarm. Mit Hilfe des Kranarms kann der Lastwagen be- und entladen werden. Während des Kranbetriebs ist der Lastwagen über zwei hydraulische Stützen und die beiden Hinterräder auf dem Boden abgestützt. Um dieses Ziel zu erreichen, arbeiten ein Nettohublast-Berechnungssystem, ein Stützkraftermittlungssystem und ein Ermittlungssystem für eine zulässige Last zusammen. Das Nettohublast-Berechnungssystem berechnet die Nettohublast bei beladenem und bei leerem Lastwagen. Ein Unterschreiten eines vorbestimmten Grenzwertes der Stützkraft wird als Kippen des Lastwagens ausgewertet.

Ferner betrifft die internationale Offenlegungsschrift WO 2013/120118 A1 einen weiteren Lastwagen mit einem Kranarm, der während des Kranbetriebes über insgesamt vier hydraulische Stützen auf dem Boden abgestützt wird. Hier erfolgt eine Ermittlung von Stützkräften der hydraulischen Stützen über eine kolben- und stangenseitige Druckmessung im hydraulischen Zylinder der Stützen. Aus den gemessenen Drücken wird dann die jeweilige Stützkraft berechnet.

Die bisher bekannten Ausgestaltungen und darauf basierenden Verfahren zur Überlastsicherung und zur Überwachung der Kippsicherheit berücksichtigen zumindest indirekt auch das Gesamtgewicht des Krans oder der Lademaschine und die hiervon gehandhabten Lasten. Für die Ermittlung des Gesamtgewichtes oder der Lasten werden zusätzliche Elemente verwendet, beispielsweise in Form von Druckmessdosen oder Lastsensoren. In deren Anordnung zwischen zwei Bauteilen des Krans oder der Lademaschine, deren Abstand bei Aufnahme einer Last relativ zueinander verändert wird, können diese bereits bei einer kurzzeitigen Überbelastung oder nicht zweckmäßigem Einsatz Schaden nehmen. Zudem müssen diese mitunter kostenintensiven Elemente zunächst angeschafft werden, wobei keinerlei universelle Verwendbarkeit in Abhängigkeit der nachzurüstenden Lademaschine garantiert ist. Angesichts dieser Beobachtungen bieten die bisherigen Ausgestaltungen und damit einhergehenden Verfahren noch Raum für Verbesserungen.

Der Erfindung liegt daher die Aufgabe zugrunde, ein Verfahren zur Ermittlung des Gewichts einer von einer Lademaschine aufgenommenen Last und eine Lademaschine hierfür zu schaffen, welches eine höhere Messgenauigkeit ermöglicht, bei gleichzeitig günstigeren Anschaffungskosten.

Diese Aufgabe wird durch ein Verfahren mit den Merkmalen von Anspruch 1 gelöst. In den abhängigen Ansprüchen 2 und 3 sowie 5 sind vorteilhafte Ausgestaltungen der Erfindung angegeben. Weiterhin besteht die Lösung dieser Aufgabe in einer Lademaschine mit den Merkmalen von Anspruch 4.

Erfindungsgemäß wird bei einem Verfahren zur Ermittlung des Gewichts einer von einer Lademaschine aufgenommenen Last, in dem mittels Messelementen Betriebs-Fluiddrücke einzelner die Lademaschine in einem Betriebszustand auf einem Untergrund hydraulisch abstützender Stützelemente ermittelt werden, wobei die Betriebs-Fluiddrücke in einer Steuereinheit aufsummiert werden und mittels einer bekannten beziehungsweise zuvor ermittelten Lastkonstante in ein Gesamtgewicht der Lademaschine umgerechnet werden und aus dem Gesamtgewicht in Kenntnis eines Eigengewichts der Lademaschine das Gewicht einer von einer Lademaschine aufgenommenen Last bestimmt wird, eine höhere Messgenauigkeit bei gleichzeitig günstigeren Anschaffungskosten dadurch erreicht, dass das bestimmte Gewicht der von der Lademaschine aufgenommenen Last in der Steuereinheit zu einem Umschlagzyklus der Lademaschine in Relation gesetzt wird, der Umschlagzyklus mit dem Schließen eines Lastaufnahmemittels der Lademaschine beginnt und mit dem Öffnen des Lastaufnahmemittels endet und das jeweils für einen Umschlagzyklus bestimmte Gewicht in der Steuereinheit zu einem für eine vorbestimmte Anzahl von Umschlagzyklen sich ergebenden Gesamtumschlagsgewicht aufaddiert wird. Hierbei sind die Betriebs-Fluiddrücke im Zusammenhang mit die Stützelemente betätigbaren Kolben-/Zylindereinheiten als Differenzdrücke der an einer bodenseitigen Kammer und einer stangenseitigen Kammer der jeweiligen Kolben-/Zylindereinheit anliegenden Drücke zu verstehen, insofern ein Druck an der stangenseitigen Kammer anliegt.

Der sich hieraus ergebende Vorteil ist darin zu sehen, dass fortan keine aufwendige Nachrüstung von mitunter mechanisch stark belasteten Messelementen mehr erfolgen muss. Hier macht sich die vorliegende Erfindung den ihr zugrundeliegenden Gedanken zunutze, die ohnehin vorhandenen druckbetätigten Stützelemente zu nutzen, indem das Gewicht der jeweiligen Lasten auf Basis des im Betrieb schwankenden Innendrucks innerhalb der Stützelemente ermittelt wird. Aufgrund der sofortigen Rückmeldung einer Lastveränderung über den Innendruck der

Stützelemente ist es möglich, eine überaus hohe Präzision in der Ermittlung des hierfür jeweils verantwortlichen Gewichts zu erreichen. Überdies können mitunter bereits vorhandene und mit den Stützelementen korrespondierende Messelement ohne die Notwendigkeit einer Nachrüstung direkt zur Gewichtsermittlung herangezogen werden, die zuvor beispielsweise einzig der Überwachung der Standsicherheit der Lademaschine dienten. Aber auch ohne deren Vorhandensein sind die Stützelemente auf einfache Weise nachrüstbar, indem die Fluidleitungen zu einer bodenseitigen Kammer und einer stangenseitigen Kammer der Kolben-/Zylindereinheit jeweils mit einem geeigneten Sensor ausgestattet werden.

Vorteilhafter Weise ist vorgesehen, dass zur Bestimmung der Lastkonstante mittels der Messelemente Basis-Fluiddrücke einzelner, die Lademaschine in einem Betriebszustand auf einem Untergrund hydraulisch abstützender Stützelemente aber im lastfreien Zustand der Lademaschine ermittelt werden, die Betriebs-Fluiddrücke in der Steuereinheit aufsummiert werden und mittels des bekannten Eigengewichts der Lademaschine in die Lastkonstante umgerechnet werden. Das Eigengewicht umfasst vorteilhafterweise auch das Gewicht des Bedieners, das beispielsweise manuell in die Steuereinheit eingegeben wird oder über einen Sensor am Sitz in der Fahrerkabine ermittelbar ist.

In erfindungsgemäßer Weise ist vorgesehen, dass das bestimmte Gewicht der von der Lademaschine aufgenommenen Last in der Steuereinheit zu einem Umschlagzyklus der Lademaschine in Relation gesetzt wird.

Eine erfindungsgemäße Bestimmung eines Umschlagzyklusses wird dadurch erreicht, dass der Umschlagzyklus mit dem Schließen eines Lastaufnahmemittels der Lademaschine beginnt und mit dem Öffnen des Lastaufnahmemittels endet.

Die erfindungsgemäße Ausführung sieht vor, dass das jeweils für einen

Umschlagzyklus bestimmte Gewicht in der Steuereinheit zu einem für eine vorbestimmte Anzahl von Umschlagzyklen sich ergebenden Gesamtumschlagsgewicht aufaddiert wird. Das Gesamtumschlagsgewicht kann jeweils aktuell graphisch dargestellt werden, insbesondere als Zahlenwert. Auf diese Weise erhält eine die Lademaschine bedienende Person eine beispielsweise stetige Information über die derzeit aufgenommene Last und/oder die bisherige Verladeleistung.

Eine erhöhte Präzision wird dadurch erreicht, dass das bekannte Eigengewicht der Lademaschine an Hand des sich im Betrieb der Lademaschine verändernden Gewichts einer mit der Lademaschine mitgeführten Menge an Kraftstoff angepasst wird.

Dieses Verfahren eignet sich insbesondere für eine Verwendung mit einer Lademaschine mit einem Unterwagen, einem drehbar hierauf gelagerten Oberwagen, an dem ein wippbarer Ausleger mit einem Ladestiel und einem Lastaufnahmemittel angeordnet ist und mit einer Steuereinheit zur Durchführung des Verfahrens.

In einer bevorzugten Ausgestaltung ist vorgesehen, dass die Lademaschine an dem Unterwagen gelagerte Stützelemente aufweist, die aus einer Ruhestellung in eine Betriebsstellung um eine erste Schwenkachse verschwenkbar sind. An den Stützelementen sind auch um eine zweite Schwenkachse schwenkbare Fußteile gelagert. Hierbei verläuft eine gedachte und durch die erste Schwenkachse und die zweite Schwenkachse verlaufende Hilfslinie parallel beziehungsweise möglichst parallel unter einem Winkel von +/- 10°, vorzugsweise +/- 5° zu dem Untergrund, auf dem die Lademaschine abgestützt ist.

Das nunmehr vorgestellte erfindungsgemäße Verfahren eröffnet eine kostengünstige Möglichkeit, um das Gewicht von mittels einer über druckbetätigte Stützelemente abgestützten Lademaschine aufgenommenen Lasten zu ermitteln. Das hierzu auf Basis der sich in den Stützelementen während des Betriebs verändernden Innendrücke berechnete Gewicht weist eine hohe Messgenauigkeit auf, da die ansonsten zu Ungenauigkeiten führenden Betriebssituationen keinen oder einen nur noch geringen Einfluss auf das Messergebnis nehmen können. Derartige Betriebssituationen reichen vom nicht unüblichen Pendeln einer aufgenommenen Last bis hin zur Beschaffenheit des jeweiligen Untergrundes. Durch Kumulation der so gewonnenen Einzelergebnisse ist ferner eine zutreffende Aussage über die innerhalb eines Zeitraums tatsächlich insgesamt beförderten Lasten möglich. Die eigentliche Messung der in den Stützelementen vorherrschenden Innendrücke kann entweder über bereits vorhandene oder einfach und kostengünstig nachzurüstende Messelemente erfolgen. Aufgrund der nur fluidleitenden und insofern nicht direkt mechanisch hoch belasteten Einbindung dieser Messelemente wird eine hohe Standzeit erreicht. Sofern notwendig, sind etwaige Reparaturen einfach und dadurch wirtschaftlich durchführbar.

Ein Ausführungsbeispiel der Erfindung wird anhand der nachfolgenden Beschreibung näher erläutert. Es zeigen:
Figur 1 eine Ansicht einer erfindungsgemäßen Lademaschine,
Figur 2 eine Vorderansicht eines Stützelements der Lademaschine nach Figur 1,
Figur 3 eine schematische Draufsicht der Lademaschine nach Figur 1,
Figur 4 ein erstes Ablaufdiagramm zur Berechnung einer Lastkonstante der Lademaschine,
Figur 5 ein zweites Ablaufdiagramm zur Berechnung eines Gesamtgewichts der Lademaschine einschließlich einer aufgenommenen Last.

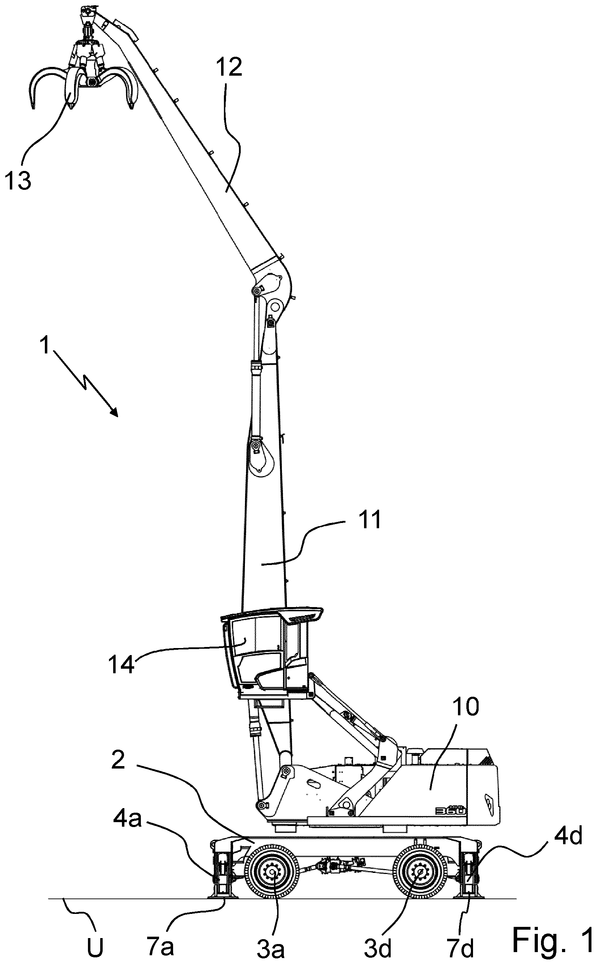

Die Figur 1 zeigt eine Ansicht einer erfindungsgemäßen Lademaschine 1. Die Lademaschine 1 besitzt einen Unterwagen 2, auf dem ein Oberwagen 10 drehbar angeordnet ist. Derartige Lademaschinen 1, die auch Umschlagmaschinen genannt werden, weisen nach Art eines Baggers an dem Oberwagen 10 einen um eine horizontale Achse mittels eines Wippzylinders wippbaren Ausleger 11 und sich hieran anschließend eine um ebenfalls eine horizontale Achse wippbare Auslegerverlängerung 12, den sogenannten Ladestiel, auf. Am äußeren Ende des Ladestieles ist ein Lastaufnahmemittel 13, vorzugsweise ein Mehrschalengreifer oder ein Zweischalengreifer, ein Greifer, eine Schrottschere, eine Magnetplatte oder ein Lasthaken angeordnet. Derartige Lademaschinen 1 werden üblicher Weise zum Umschlag von Schüttgütern, Holzstämmen, Schrott oder anderem Recyclingmaterial eingesetzt. An dem Oberwagen 10 ist auch eine Fahrerkabine 14 angeordnet, die vorzugsweise hydraulisch stufenlos hochfahrbar ist.

Der Unterwagen 2 umfasst vorliegend ein zweiachsiges Fahrgestell mit vier daran angeordneten gummibereiften Rädern 3a bis 3d, die insbesondere als Zwillingsräder ausgebildet sind. Im Bereich jedes dieser Räder 3a bis 3d ist nach Art einer 4-Punkt-Abstützung jeweils ein Stützelement 4a bis 4d angeordnet, über welche der Unterwagen 2 gegenüber einem Untergrund U während des Ladebetriebs abstützbar ist. Bei den Stützelementen 4a bis 4d handelt es sich vorliegend um solche, die hydraulisch in Fahrtrichtung der Lademaschine 1 gesehen seitlich aus einer vertikalen Ruhestellung in eine vom Unterwagen 2 aus schräg nach unten in Richtung des Untergrunds U verlaufende Betriebsstellung ein- und ausklappbar ist. An den äußeren Enden der Stützelemente 4a bis 4d sind jeweils Fußteile 7a bis 7d, insbesondere Abstützteller, zur Verteilung der Stützkräfte auf den Untergrund U angeordnet.

Mittels der Stützelemente 4a bis 4d wird der Unterwagen 2 im Betrieb grundsätzlich derart gegenüber dem Untergrund U abgestützt, dass sich ein sicherer Stand für die Lademaschine 1 ergibt. Hierbei werden in üblicher Weise die Räder 3a bis 3d vom Untergrund U abgehoben.

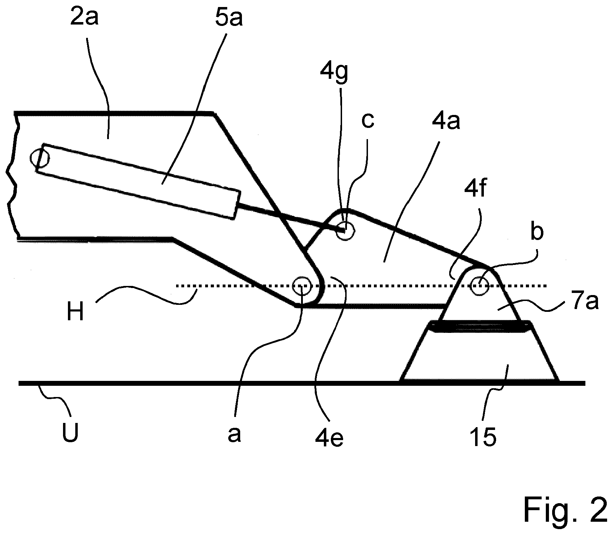

Die Figur 2 zeigt eine Vorderansicht eines Stützelements 4a der Lademaschine 1 in seiner Betriebsstellung. Die verbleibenden Stützelemente 4b bis 4d mit den zugehörigen Fußteilen 7a bis 7d sind vergleichbar ausgebildet. Das Stützelement 4a ist um eine horizontale und in Fahrtrichtung der Lademaschine 1 verlaufende erste Schwenkachse a aus der Ruhestellung in die in Figur 2 dargestellte Betriebsstellung schwenkbar. Die Schwenkachse a ist in entsprechenden Bohrungen an einer inneren Ecke 4e des Stützelementes 4a und an einer laschenartigen Verlängerung eines Rahmenteil 2a des Unterwagens 2 aufgenommen. Die erste Schwenkachse a ist üblicherweise als Bolzen ausgebildet. Das Stützelement 4a ist als Stahlblech ausgebildet, das die Form eines unregelmäßigen, stumpfwinkligen Dreiecks hat. In der inneren Ecke 4e des Stützelements 4a ist die erste Schwenkachse a aufgenommen und in einer gegenüberliegenden äußeren Ecke 4f des Stützelements 4a eine zweite Schwenkachse b, die mit Ihrer Längsachse parallel zur ersten Schwenkachse a ausgerichtet ist. Auch die zweite Schwenkachse b ist üblicherweise als Bolzen ausgebildet. An der zweiten Schwenkachse b ist das Fußteil 7a schwenkbar gelagert. Unten an dem Fußteil 7a ist eine Unterlage 15 angeordnet beziehungsweise das Fußteil 7a stützt sich über die Unterlage 15 auf dem Boden U ab. Hierbei können Fußteil 7a und Unterlage 15 auch zu einem Bauteil zusammengefasst werden.

Die Funktion der Unterlage 15 ist darin zu sehen, dass eine gedachte und durch die erste Schwenkachse a und die zweite Schwenkachse b verlaufende Hilfslinie H parallel beziehungsweise möglichst parallel zum Untergrund U verläuft. In diesem Zusammenhang ist möglichst parallel als eine Abweichung von +/- 10°, vorzugsweise +/- 5° der Hilfslinie H von der Parallelität zu verstehen. Entsprechend schneiden sich eine Gerade entlang der Oberfläche des Untergrundes U und die Hilfslinie H unter einem Winkel von +/- 10°, vorzugsweise +/- 5°. Diese Parallelität vermeidet, dass es im belasteten Zustand der Stützelemente 4a bis 4d im Betriebszustand zu etwaigen Relativbewegungen zwischen dem Fußteil 7a bis 7d des Stützelements 4a bis 4d und dem jeweiligen Untergrund U kommt. Derartige Relativbewegungen können zu ungewollten Messabweichungen führen.

Die angestrebte Parallelität wird durch geeignete Unterlagen 15 unter den Fußteilen 7a bis 7d der einzelnen Stützelemente 4a bis 4d erreicht. Als Unterlagen 15 kommen Unterlagen aus Kunststoff, Holz oder Stahl in Frage oder bis zur erforderlichen Höhe mit Sand gefüllte Behälter. Auch können die Fußteile 7a bis 7d im Sinne von Spezial-Fußteilen einen entsprechend hohen Tellerbereich aufweisen.

Um die Stützelemente 4a bis 4d aus ihrer Ruhestellung in die Betriebsstellung und umgekehrt verschwenken zu können, ist eine hydraulische Kolben-/Zylindereinheit 5a vorgesehen, die mit ihrem Gehäuse an dem Rahmenteil 2a des Unterwagens 2 und mit ihrer Stange an einer oberen Ecke 4g des jeweiligen Stützelements 4a bis 4d angelenkt ist. Die Anlenkachsen der Kolben-/Zylindereinheit 5a verlaufen hierbei parallel zu den ersten und zweiten Schwenkachsen a, b.

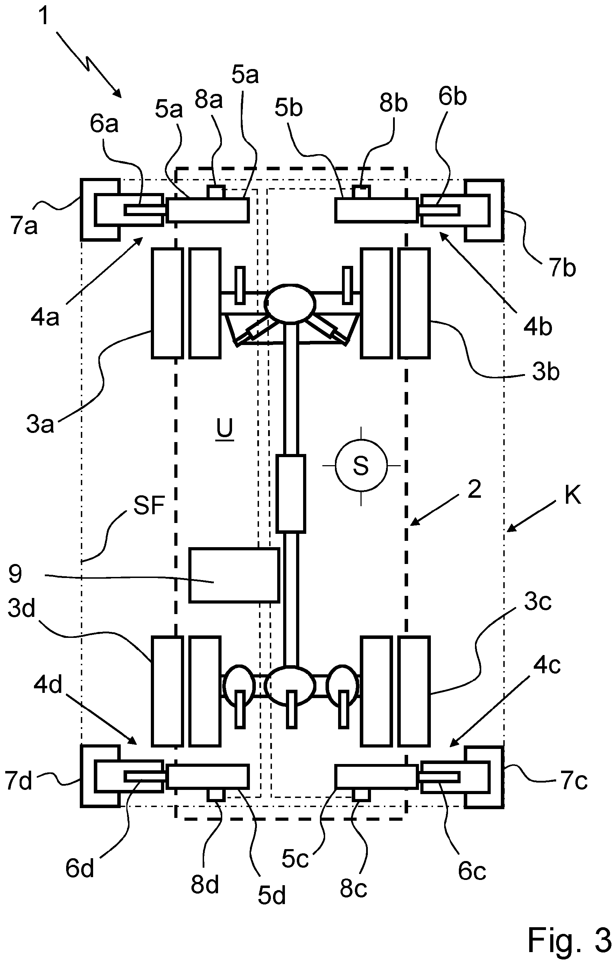

Die Figur 3 zeigt eine schematische Draufsicht der Lademaschine 1 nach Figur 1. Die Stützelemente 4a bis 4d beziehungsweise deren Fußteile 7a bis 7d spannen auf dem Untergrund U eine Stützfläche SF auf. Solange die Projektion eines sich im Betrieb der Lademaschine 1 in seiner Lage verändernden Schwerpunkts S der belasteten oder unbelasteten Lademaschine 1 innerhalb dieser Stützfläche SF gelegen ist, kann von einem sicheren Stand für die Lademaschine 1 ausgegangen werden. Erst mit Annäherung an eine die Stützfläche SF umlaufend begrenzende Kippkante K kann naturgemäß von einer zunehmenden Instabilität in Bezug auf eine mögliche Kippgefahr der Lademaschine 1 ausgegangen werden.

Jedes der Stützelemente 4a bis 4d weist für den Aus-/Einklappvorgang zwischen der Ruhestellung und der Betriebsstellung die hydraulische Kolben-/Zylindereinheit 5a bis 5d mit jeweils einer linear beweglich darin geführten Kolbenstange 6a bis 6d auf. Weiterhin ist jeder Kolben-/Zylindereinheit 5a bis 5d ein Messelement 8a bis 8d zugeordnet, mit dem der Druck in der jeweiligen Kolben-/Zylindereinheit 5a bis 5d gemessen wird. Das Messelement 8a bis 8d erfasst jeweils den Druck in der bodenseitigen Kammer und der stangenseitigen Kammer der Kolben-/Zylindereinheit 5a bis 5d, um aus der Differenz der Drücke die jeweilige Stützkraft zu ermitteln. Das Messelement 8a bis 8d umfasst somit mindestens zwei Sensoren. Vorliegend sind die Messelemente 8a bis 8d von außen jeweils an der Kolben-/Zylindereinheit 5a bis 5d angeordnet, können aber auch beispielsweise innerhalb der Kolben-/Zylindereinheit 5a bis 5d oder in druckführenden Fluidleitungen zu der Kolben-/Zylindereinheit 5a bis 5d eingegliedert sein. Der stangenseitige Druck ist nur Null, wenn die Lademaschine 1 längere Zeit in Ruhe war. Beim Arbeiten mit der Lademaschine 1 kommt es bei mehreren Lastwechseln zu einem Ansteigen des Druckes in der Stangenseite, was auch zu einem Druckanstieg in der Bodenseite führt. Um die Kraft an der Kolben-/Zylindereinheit 5a bis 5d berechnen zu können, müssen daher die Drücke in der bodenseitigen Kammer und der stangenseitigen Kammer der Kolben-/Zylindereinheit 5a bis 5d bestimmt werden, um aus der Differenz der Drücke die jeweilige Stützkraft der Kolben-/Zylindereinheit 5a bis 5d zu ermitteln.

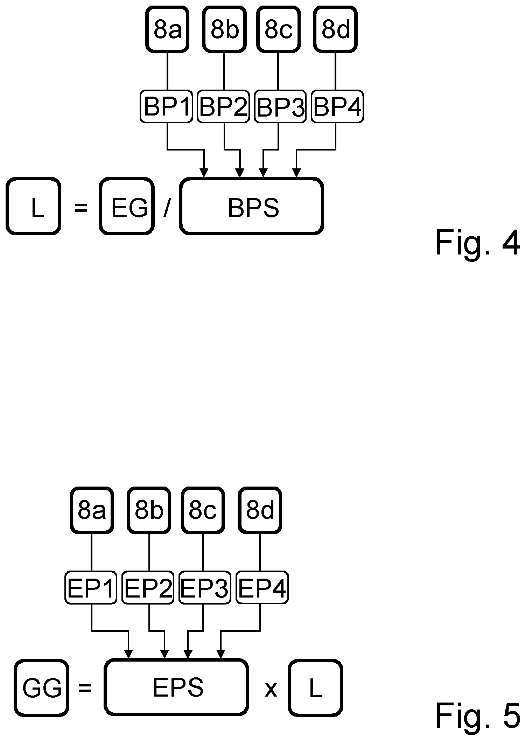

Die Figur 4 zeigt ein erstes Ablaufdiagramm zur Bestimmung einer Lastkonstante L der Lademaschine 1. Hierfür befindet sich die Lademaschine 1 in der Betriebsstellung, in der die Stützelemente 4a bis 4d gegenüber dem Untergrund U abgestützt und die Lademaschine 1 in einem lastfreien Zustand ist. Mittels der Messelemente 8a bis 8d an den Stützelementen 4a bis 4d wird nun jeweils ein Basis Fluiddruck BP1 bis BP4 je Kolben-/Zylindereinheit 5a bis 5d ermittelt. Anschließend werden die einzelnen Basis Fluiddrücke BP1 bis BP4 zu einem Basis Fluiddruck Summenwert BPS aufaddiert. In Kenntnis des Eigengewichts EG der Lademaschine 1, das proportional zu dem Basis Fluiddruck Summenwert BPS ist, wird eine für die weiteren Berechnungen relevante, individuelle Lastkonstante L berechnet, indem das Eigengewicht EG durch den Basis Fluiddruck Summenwert BPS dividiert wird. Das Eigengewicht EG umfasst vorteilhafterweise auch das Gewicht des Bedieners.

In der Figur 5 wird anhand eines zweiten Ablaufdiagramms die Berechnung eines durch Aufnahme einer Last naturgemäß über dem Eigengewicht EG liegenden Gesamtgewichts GG der Lademaschine 1 gezeigt. Hierzu werden zunächst die gegenüber dem zuvor lastfreien Zustand nunmehr erhöhten Betriebs Fluiddrücke EP1 bis EP4 durch die einzelnen Messelemente 8a bis 8d erfasst. Anschließend werden die so erfassten Betriebs Fluiddrücke EP1 bis EP4 zu einem Betriebs Fluiddruck Summenwert EPS miteinander addiert. Das Gesamtgewicht GG wird durch Multiplikation des Betriebs Fluiddruck Summenwerts EPS mit der Lastkonstante L errechnet. In Kenntnis des Eigengewichts EG der Lademaschine 1 kann somit das Lastgewicht durch Subtraktion des Eigengewichts EG von dem Gesamtgewicht GG errechnet werden. Anhand dieses ermittelten Lastgewichtes, das auf einen Umschlagzyklus bezogen werden kann, kann dann auch eine Umschlagleistung der Lademaschine 1 über die Zeit ermittelt werden. Ein Umschlagzyklus ist hierbei dann als Zeitdauer zwischen einem Schließen und einem Öffnen eines Greifers der Lademaschine 1 definiert. Umschlagzyklen ohne transportierte Last können dann in Kenntnis des Eigengewichts EG der Lademaschine 1 erkannt werden. Es ist auch möglich, dass neben automatischen oder teilautomatischen Lösungen der Maschinenbediener den Wiegeprozess mittels Tastenbedienung auslöst.

In Ergänzung kann vorgesehen werden, das bekannte Gesamtgewicht GG der Lademaschine 1 in Hinblick auf die sich im Betrieb der Lademaschine 1 zwangsläufig verändernde Menge an mitgeführtem Kraftstoff anzupassen. Hierfür ist dem Tank ein Füllstandsensor zugeordnet, der ebenfalls mit der Steuereinheit 9 verbunden ist.

Außerdem kann das Gewicht des Bedieners in der Steuereinheit 9 erfasst und in die Berechnung des jeweiligen Gesamtgewichts GG mit einfließen, so dass überaus präzise Messwerte in Bezug auf die einzelnen und umgeschlagenen Lasten ermittelbar sind.

Sollte es bereits beim Ausfahren der Stützelemente 4a bis 4d oder im laufenden Betrieb der Lademaschine 1 zu einer Unterschreitung eines unteren Grenzwerts oder einer Überschreitung eines oberen Grenzwerts für den erfassten Basis Fluiddruck BP1 bis BP4 oder den erfassten Betriebs Fluiddruck EP1 bis EP4 kommen, ist die Ausgabe einer entsprechenden Information über die Steuereinheit 9 vorgesehen. Diese kann bevorzugt in einer graphischen Form erfolgen, so dass eine die Lademaschine 1 bedienende Person über die reine Kenntnis einer solchen Unter- und/oder Überschreitung hinaus beispielsweise zusätzliche Information erhalten kann, wie etwa den Wert der Unter- oder Überschreitung und/oder einen Hinweis auf das hiervon betroffene Stützelement 4a bis 4d. Alternativ oder ergänzend hierzu kann als Reaktion auf eine solche Unter- und/oder Überschreitung selbstverständlich auch eine Einschränkung oder gar Abschaltung mindestens einer Funktion der Lademaschine 1 erfolgen.

Auf die wie zuvor beschriebene Weise kann die die Lademaschine 1 bedienende Person auch eine Information hinsichtlich einer Überschreitung einer Geschwindigkeit für einen Abfall des erfassten Basis Fluiddrucks BP1 bis BP4 oder des jeweiligen Betriebs Fluiddrucks EP1 bis EP4 erhalten, die auf eine mögliche Leckage im Drucksystem hindeutet. Neben deren möglicher graphischer Präsentation kann alternativ oder ergänzend hierzu ebenfalls auch eine Einschränkung oder gar Abschaltung mindestens einer Funktion der Lademaschine 1 erfolgen.

Auch kann eine Überwachung der Belastung des Untergrundes / Bodendruckes erfolgen, um vor einer Überlastung eines empfindlichen Untergrundes zu warnen.

### Bezugszeichenliste

1 Lademaschine
2 Unterwagen
2a Rahmenteil
3a bis 3d Rad
4a bis 4d Stützelement
4e innere Ecke
4f äußere Ecke
4g obere Ecke
5a bis 5d Kolben-/Zylindereinheit
6a bis 6d Kolbenstange
7a bis 7d Fußteil
8a bis 8d Messelement
9 Steuereinheit
10 Oberwagen
11 Ausleger
12 Auslegerverlängerung
13 Mehrschalengreifer
14 Fahrerkabine
15 Unterlage
a erste Schwenkachse
b zweite Schwenkachse
BP1 bis BP4 Basis Fluiddruck
BPS Basis Fluiddruck Summenwert
EG Eigengewicht
EP1 bis EP4 Betriebs Fluiddruck
EPS Betriebs Fluiddruck Summenwert
GG Gesamtgewicht
H Hilfslinie
K Kippkante von SF
L Lastkonstante
S Schwerpunkt
SF Stützfläche
U Untergrund

## Patentansprüche

1. Verfahren zur Ermittlung des Gewichts einer von einer Lademaschine (1) aufgenommenen Last, in dem mittels Messelementen (8a bis 8d) Betriebs-Fluiddrücke (EP1 bis EP4) einzelner, die Lademaschine (1) in einem Betriebszustand auf einem Untergrund (U) hydraulisch abstützender Stützelemente (4a bis 4d) ermittelt werden, wobei die Betriebs-Fluiddrücke (EP1 bis EP4) in einer Steuereinheit (9) aufsummiert werden und mittels einer bekannten beziehungsweise zuvor ermittelten Lastkonstante (L) in ein Gesamtgewicht (GG) der Lademaschine (1) umgerechnet werden und aus dem Gesamtgewicht (GG) in Kenntnis eines Eigengewichts (EG) der Lademaschine (1) das Gewicht einer von einer Lademaschine (1) aufgenommenen Last bestimmt wird, **dadurch gekennzeichnet, dass** das bestimmte Gewicht der von der Lademaschine (1) aufgenommenen Last in der Steuereinheit (9) zu einem Umschlagzyklus der Lademaschine (1) in Relation gesetzt wird, der Umschlagzyklus mit dem Schließen eines Lastaufnahmemittels der Lademaschine (1) beginnt und mit dem Öffnen des Lastaufnahmemittels endet und das jeweils für einen Umschlagzyklus bestimmte Gewicht in der Steuereinheit (9) zu einem für eine vorbestimmte Anzahl von Umschlagzyklen sich ergebenden Gesamtumschlagsgewicht aufaddiert wird.

2. Verfahren nach Anspruch 1, **dadurch gekennzeichnet, dass** zur Bestimmung der Lastkonstante (L) mittels der Messelemente (8a bis 8d) Basis-Fluiddrücke (BP1 bis BP4) einzelner, die Lademaschine (1) in einem Betriebszustand auf einem Untergrund (U) hydraulisch abstützender Stützelemente (4a bis 4d) aber im lastfreien Zustand der Lademaschine (1) ermittelt werden, die Betriebs-Fluiddrücke (BP1 bis BP4) in der Steuereinheit (9) aufsummiert werden und mittels des bekannten Eigengewichts (EG) der Lademaschine (1) in die Lastkonstante (L) umgerechnet werden.

3. Verfahren nach einem der vorhergehenden Ansprüche, **dadurch gekennzeichnet, dass** das bekannte Eigengewicht (EG) der Lademaschine (1) an Hand des sich im Betrieb der Lademaschine (1) verändernden Gewichts einer mit der Lademaschine (1) mitgeführten Menge an Kraftstoff angepasst wird.

4. Lademaschine (1) mit einem Unterwagen (2), einem drehbar hierauf gelagerten Oberwagen, an dem ein wippbarer Ausleger mit einem Ladestiel und einem Lastaufnahmemittel angeordnet ist und mit einer Steuereinheit (9) zur Durchführung des Verfahrens nach einem der vorhergehenden Ansprüche.

5. Lademaschine (1) nach Anspruch 4, **dadurch gekennzeichnet, dass** aus einer Ruhestellung in eine Betriebsstellung um eine erste Schwenkachse (a) verschwenkbare Stützelemente (4b bis 4d) an dem Unterwagen (2) gelagert sind, an den Stützelementen (4b bis 4d) um eine zweite Schwenkachse (b) Fußteile (7a bis 7d) verschwenkbar gelagert sind, eine gedachte und durch die erste Schwenkachse (a) und die zweite Schwenkachse (b) verlaufende Hilfslinie (H) parallel beziehungsweise möglichst parallel unter einem Winkel von +/- 10°, vorzugsweise +/-5° zu einem Untergrund (U) verläuft.

## Claims

1. Method for determining the weight of a load picked up by a loading machine (1), in which operating fluid pressures (EP1 to EP4) of individual support elements (4a to 4d) which hydraulically support the loading machine (1) in an operating state on a substrate (U) are determined by means of measuring elements (8a to 8d), the operating fluid pressures (EP1 to EP4) being added up in a control unit (9) and converted into a total weight (GG) of the loading machine (1) by means of a known or previously determined load constant (L), and the weight of a load picked up by a loading machine (1) being determined from the total weight (GG) with knowledge of a dead weight (EG) of the loading machine (1), **characterised in that** the determined weight of the load picked up by the loading machine (1) is related to a handling cycle of the loading machine (1) in the control unit (9), the handling cycle begins with the closing of a load-carrying means of the loading machine (1) begins and ends with the opening of the load-carrying means, and the weight determined in each case for a handling cycle is added to a total handling weight resulting for a predetermined number of handling cycles in the control unit (9).

2. Method according to claim 1, **characterised in that**, in order to determine the load constant (L) by means of the measuring elements (8a to 8d), base fluid pressures (BP1 to BP4) of individual support elements (4a to 4d) which hydraulically support the loading machine (1) in an operating state on a substrate (U) are determined in the load-free state of the loading machine (1), and the operating fluid pressures (BP1 to BP4) are added up in the control unit (9) and converted into the load constant (L) by means of the known dead weight (EG) of the loading machine (1).

3. Method according to any of the preceding claims, **characterised in that** the known dead weight (EG) of the loading machine (1) is adjusted on the basis of the weight of an amount of fuel carried by the loading machine (1), which weight changes during operation of the loading machine (1).

4. Loading machine (1) comprising an undercarriage (2), a superstructure rotatably mounted thereon, on which a luffing jib having a dipper stick and a load handling means is arranged, and a control unit (9) for carrying out the method according to any of the preceding claims.

5. Loading machine (1) according to claim 4, **characterised in that** support elements, (4b to 4d) which can be pivoted about a first pivot axis (a) from a rest position into an operating position, are mounted on the undercarriage (2), base parts (7a to 7d) are pivotably mounted on the support elements (4b to 4d) about a second pivot axis (b), and an imaginary auxiliary line (H) extending through the first pivot axis (a) and the second pivot axis (b) extends in parallel with a substrate (U) or as parallel as possible thereto, at an angle of +/- 10°, preferably +/- 5°.

## Revendications

1. Procédé de détermination du poids d'une charge reçue par une chargeuse (1), procédé dans lequel des pressions de fluides de service (EP1 à EP4) d'éléments de support (4a à 4d) individuels qui supportent hydrauliquement la chargeuse (1) dans un état de fonctionnement sur un sol d'infrastructure (U), sont déterminées au moyen d'éléments de mesure (8a à 8d), les pressions de fluide de service (EP1 à EP4) étant additionnées dans une unité de commande (9) et converties en un poids total (GG) de la chargeuse (1) à l'aide d'une constante de charge (L) connue ou préalablement déterminée et le poids d'une charge reçue par une chargeuse (1) étant déterminé à partir du poids total (GG) sur la base connue d'un poids propre (EG) de la chargeuse (1), **caractérisé en ce que** le poids déterminé de la charge reçue par la chargeuse (1) est mise en relation avec un cycle de transfert de la chargeuse (1) dans l'unité de commande (9), le cycle de transfert commence par la fermeture d'un moyen de réception manipulation de charge de la chargeuse (1) et se termine par l'ouverture du moyen de réception de charge et le poids déterminé pour chaque cycle de transfert dans l'unité de commande (9) est additionné à un poids de transfert total résultant pour un nombre prédéterminé de cycles de charge.

2. Procédé selon la revendication 1, **caractérisé en ce que**, pour déterminer la constante de charge (L), des pressions de fluide de base (BP1 à BP4) d'éléments de support (4a à 4d) individuels qui supportent hydrauliquement la chargeuse (1) sur un sol d'infrastructure (U) dans un état de fonctionnement sont déterminées au moyen des éléments de mesure (8a à 8d) mais à l'état sans charge de la chargeuse (1), les pressions de fluide de service (BP1 à BP4) sont additionnées dans l'unité de commande (9) et converties en la constante de charge (L) à l'aide du poids propre connu (EG) de la chargeuse (1).

3. Procédé selon l'une des revendications précédentes, **caractérisé en ce que** le poids propre connu (EG) de la chargeuse (1) est adapté sur la base du poids d'une quantité de carburant transportée avec la chargeuse (1), lequel poids varie pendant le fonctionnement de la chargeuse (1).

4. Chargeuse (1) comprenant une infrastructure (2), une superstructure qui est montée de manière rotative sur celle-ci sur laquelle est disposée une flèche basculante pourvue d'un mât de charge et d'un moyen de réception de charge et d'une unité de commande (9) destinée à mettre en oeuvre le procédé selon l'une des revendications précédentes.

5. Chargeuse (1) selon la revendication 4, **caractérisée en ce que** des éléments de support (4b à 4d) pivotant sur un premier axe de pivotement (a) d'une position de repos à une position de fonctionnement sont montés sur l'infrastructure (2), des parties de pied (7a à 7d) sont montées sur des éléments de support (4b à 4d) de manière pivotante sur un deuxième axe de pivotement (b), une ligne auxiliaire imaginaire (H) passant par le premier axe de pivotement (a) et le deuxième axe de pivotement (b) s'étend parallèlement à un sol d'infrastructure (U) ou, autant que possible parallèlement à celui-ci en formant un angle de +/- 10°, de préférence +/- 5°.
